# EUROPEAN PATENT APPLICATION

(11) **EP 3 772 001 A1**
(43) Date of publication of application: **03.02.2021**
(21) Application number: 20189005.0
(22) Date of filing: 31.07.2020
(51) Int. Cl.: G06F 21/35, A24F 47/00

(54) **DEVICE, METHOD, AND SYSTEM FOR CONTROLLING ACCESS TO AGE-RESTRICTED ELECTRONIC PRODUCTS**

(30) Priority: 02.08.2019 US 201962881962 P; 03.01.2020 US 202016734272
(71) Applicant: Flokos, Konstantinos, 16345 Ilioupolis (GR)
(72) Inventor: Flokos, Konstantinos, 16345 Ilioupolis (GR)
(74) Representative: Georgellis, Georgios

(57) **Abstract**

A system for preventing the unauthorized operation of an age restricted electronic product such as a vaping device, or a heated tobacco electronic cigar, or an automatic dispenser of age-restricted products the system comprising:
a mobile device application coupled with an age verification platform configured to verifying the age of the user and for communicating with the restricted electronic product for unlocking the age-restricted operations of the restricted electronic product.

## Description

### FIELD OF THE INVENTION

The present invention relates generally to a method and system for controlling access to age-restricted electronic products. More particularly, the present invention relates to a method and system for restricting access of minors to age-restricted electronic devices such as electronic heated tobacco products, vaping devices, reduced risk electronic cigarettes, electronic devices for mild drugs use, automatic dispensers of age-restricted products, unattended betting machines and the like which are legal to be used by adults but are illegal to be used by minors. Some of those products are bought by the users for personal use and it is better if connectivity to them is controlled, while in other products the use is public and connectivity should be facilitated to new users.

### BACKGROUND

There is an increased concern about the use of age restricted electronic products by underage persons. Products such as heated tobacco products, vaping devices, reduced risk cigarettes, electronic devices for mild drugs use, etc. are either forbidden or subject to serious use or purchase restrictions for minors; still minors are generally able to use or buy such products as soon as they can get hold of them.

A common characteristic of age restricted electronic products is that while they may be purchased by an adult, they are generally easy to fall in the possession of a minor who may then use them without any restriction. Also, while they may be legal for use in one jurisdiction, they may be illegal to be used in another jurisdiction. Age restricted electronic products are also, generally, easy to transport and use without an adult being present.

There are numerous restricted electronic products for sale to adults only, which are bought by adults as intended, but are finally used by underage persons as soon as they get access to them unattended.

Today, all those products, are generally easy to turn on and use, even by children of less than 12 years old. It is worth noting that traditional cigar lighters require a special technique and physical strength that an average child of less than 12 years old does not have.

As a result, the rather easy accessibility of these products to minors is a serious issue.

Therefore, a solution is needed for controlling and preventing the use by minors of age-restricted electronic products and/or automatic dispensers of age-restricted products. In some cases, these products may be illegal to use in some jurisdictions and legal to use in other jurisdictions. In other cases, the manufacturer or the purchaser of these products, may simply wish to prevent unauthorized use, especially by minors, even if such use may be legal. These electronic products will be hereinafter referred to as age restricted electronic products or simply restricted electronic products.

### SUMMARY OF THE INVENTION

The present invention system and method provides an elegant technical solution that addresses the aforementioned problems of the prior art. More specifically, the present invention system and method require a user of a restricted electronic product to have a mobile device, for example, a smart phone (e.g. an iPhone, a Samsung smart phone and the like) or a smart-watch (e.g. an Apple Watch, a Samsung Galaxy watch and the like) in the proximity of the restricted electronic product. The restricted electronic product communicates wirelessly with the mobile device when the user wishes to use the restricted electronic product in order to allow the operation of the restricted electronic product. The mobile device provides age confirmation of the age of the user to the restricted electronic product before operation of the restricted electronic product can be unblocked and the restricted electronic product enjoyed by the user. In a preferred embodiment, the age of the user should have been verified ('proven') in advance, before the usage of the restricted electronic product. The 'age proof' may be generated in the form of a private certificate with long term expiration or stored in an Age Verification platform for easier and more secure management. The user must prove ownership of the certificate or access to the Age Verification platform, before he can share this proof with the restricted electronic product. When the user shares this proof, in the form of an Age Verification Statement, the restricted electronic product must verify its integrity and check that the statement is positive, before enabling age-restricted operations of the product.

In the present invention, use of an Age Verification platform is preferred for various reasons, including:
- The ability to hide the user's real age from the restricted electronic product, by simply including a Boolean response (Yes or No) in the Age Verification Statement
   The ability to dynamically adapt the age requirements for specific products per country/region of the user; It is noted that without the AV platform, the restricted electronic product must be updated every time the legislation changes for either a product category or in a country. In the current invention the use of the Age Verification platform is assumed, in view of providing the best possible outcome for all involved stakeholders.

In an embodiment, the mobile device and the restricted electronic product may be paired. Pairing is required when the restricted electronic product is acquired for individual use for security and convenience reasons. Pairing may be performed initially once, for example, at a first use of the restricted electronic product. Thereafter, after the initial pairing, in any future use of the same restricted electronic product, the restricted electronic product pairs with the paired device automatically provided that the paired mobile device is in the vicinity of the restricted electronic product. Pairing may preferably include that a pairing request is sent to the mobile device from the restricted electronic product and the user is prompted to enter a unique product code to complete the pairing. The unique product code may, for example, be obtained by the user by visually inspecting the restricted electronic product. The unique product code is referred to hereinafter also as a pairing code. For example, the pairing code may be a code written in a label attached on the restricted electronic product. The label may be a removable label which can be removed by the user of the restricted electronic product after purchasing the product or once he or she has made the first pairing to prevent someone who gets unauthorized possession of the restricted electronic product to use it.

The restricted electronic product cannot be operated without the presence of a mobile device such as a smart phone in the proximity of the user which can connect with the restricted electronic product and which has the age verification capability. The restricted electronic product should include a control circuit for controlling the operation of the various components of the restricted electronic product including means for communicating wirelessly with the mobile device and means for controlling the blocking and unblocking age-restricted operations of the restricted electronic product. Unblocking of the age-restricted operations of the restricted electronic product can be performed only after the restricted electronic product communicates with the mobile device and receives a positive age verification statement for the user from the mobile device of the user.

According to an embodiment, the system includes a mobile device including an age verification application for verifying the age of the user (and owner) of the mobile device. The age verification application may communicate with a web-based platform (also referred to herein as an age verification platform). Confirmation that the user of the paired mobile device (e.g., the owner) is of a certain age (hereinafter called 'age proofing') may be performed by the age verification application before the initial connection of the restricted electronic product with the mobile device of the user. It is noted that the details of the 'age proofing' step is not part of the present invention and age proofing may be performed via a number of suitable methods; during the age proofing step though, the age of the user is preferably 'proven' using a method with an acknowledged 'Level of Assurance (LoA)', then stored in the Age Verification platform and related to the mobile application using a secret identifier. During the initial proofing of the age of the user of the mobile device the system may issue or the user may chose a secret token bound to a secret identifier, for example, in the form of an alphanumeric pin that the user can employ to confirm that he or she is the same user having performed the original age proofing. For example, when using the restricted electronic product, or another restricted electronic product, the age confirmation will be satisfied without going through an age proofing process, rather than by simply the user entering the age verification token already specified during the 'age proofing' step. This is because only the user of the mobile application used to prove the age knows the secret token and can then make use of the mobile application. Confirmation of the age of the user may include confirmation that the user is not a minor, i.e., has an age of at least equal to the minimum required age for the legal use of the restricted electronic product in the geographical area (country, state, region or other) that the user is currently present and the method originally used to prove the age is at least of a minimum Level of Assurance. As an example, in some countries, a self-declarative statement of the user's age (i.e. with a very low LoA) being over 18 may be acceptable, while in other countries the minimum age can be 21 and the method used should at least invoke a third party independently confirming the user's age (i.e. a higher level of LoA).

The system may include an age checking component. The age checking component may be a software library or a combination of hardware and software. The system may include a wireless hardware component to be used inside the restricted electronic product. The software library may provide communication of the component with the mobile device, the requesting of the age confirmation statement and the receiving and verification of the age confirmation statement from the mobile device, and the interaction with the control unit of the restricted electronic product.

In an embodiment, the system may further include means for verifying the distance between the restricted electronic product and the mobile device and for blocking the operation of the restricted electronic product unless the distance is less than a preset value, preferably less than 2 meters, more preferably less than 30 cm or less, preferably 20 cm or less.

In an embodiment, the system may further require the pairing of the restricted electronic product with the mobile device by requesting the user of the mobile device to enter a pairing code.

In an embodiment, the age confirmation statement sent to the restricted electronic product may be encrypted with a private key held by the age verification platform and decrypted by the software library on the restricted electronic product using the corresponding public key. The public key may be installed on the restricted electronic product upon initial configuration and updated - if needed - only by qualified service personnel.

In an embodiment, the restricted electronic product may include a unique identifier in all products of the same category (e.g. vaping pods of manufacturer A), so that the age verification platform may accurately determine the age requirements and the required Level of Assurance defined in the specific geographical region for a user to legally use the restricted electronic product. For example, a manufacturer may decide to use a different identifier for all products of a specific type, primarily for statistical reasons.

According to an embodiment, an initial proofing of the age of the user of the mobile device is performed using the age verification application and the age verification platform.

The age verification platform may use a combination of Artificial Intelligence and Big Data algorithms to achieve a high level of accuracy and full risk analysis of every user action, related to his age identity. To protect the end-users' personal information, all data collected may be anonymized and related only to the secret identifier of the application installed on the mobile device of the user.

These and other advantages and features of the present invention will become better understood from the following detailed description in conjunction with the following figures.

### BRIEF DESCRIPTION OF THE DRAWINGS

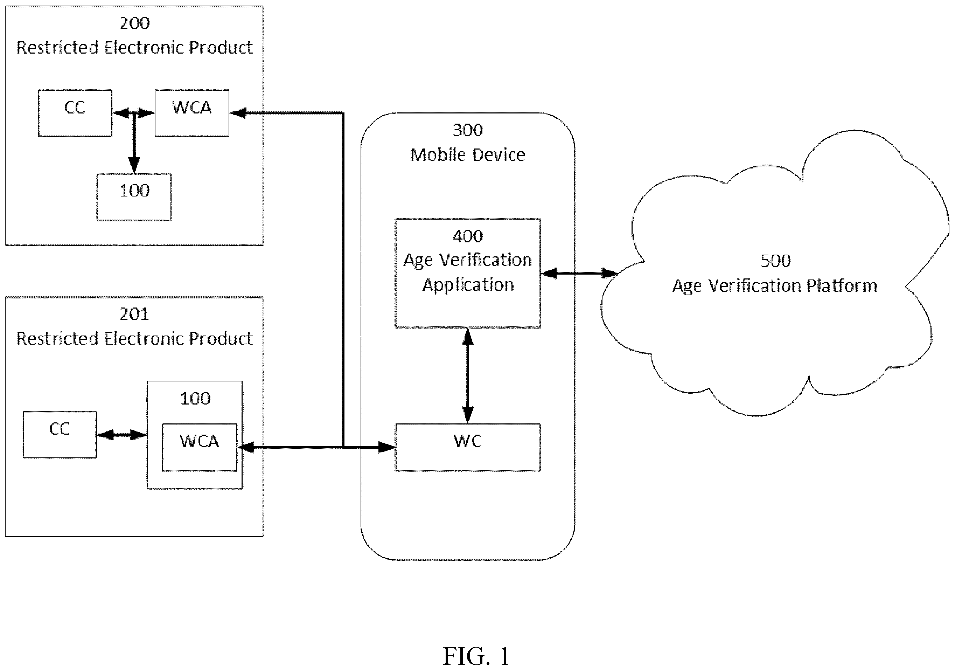

FIG. 1 is a simplified schematic of a system according to an embodiment of the present invention including an age checking component 100 installed on a restricted electronic product 200, a mobile device (such as smartphone, smart-watch or other) 300, an age verification application 400 installed on the mobile device and an age verification platform 500 used for encrypting the age verification statement and for risk analysis purposes. The smart phone includes wireless communication capabilities such as Wi-Fi, Bluetooth or NFC (near field communication). The age checking component 100 may be a software library (as in product 200) or a combination of hardware and software (as in product 201).

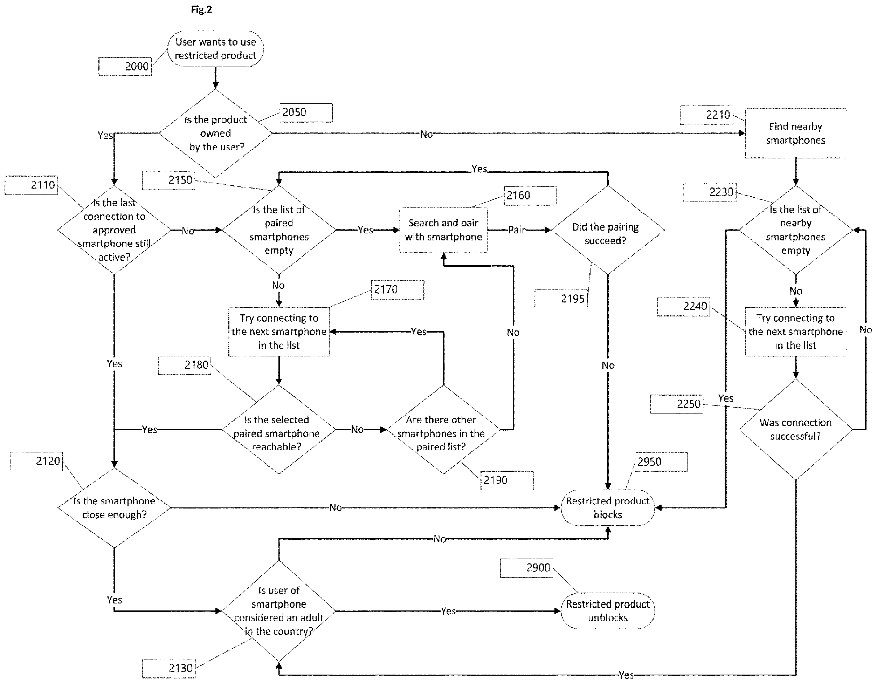

FIG. 2 is a flowchart of a method of operation of a restricted product according to an embodiment of the present invention.

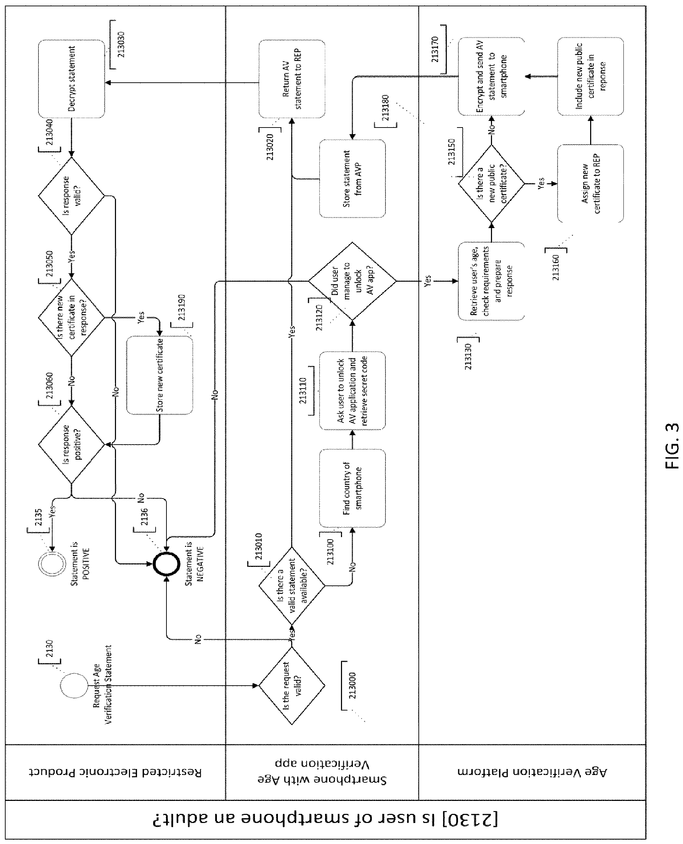

FIG. 3 is a Business Process Modelling Notation (BPMN) diagram of the interaction between the Restricted Electronic Product (REP), the Age Verification Application (AVA) and the Age Verification Platform (AVP) during the actual controlling of the age of the user trying to use the REP via a mobile device running an AVA registered by himself, while having initially performed an age proofing against the AVP.

### DETAILED DESCRIPTION OF THE INVENTION

The present invention system and method provide an elegant technical solution for controlling the use of restricted electronic products by unauthorized users e.g., minors. The present invention system and method provide an elegant technical solution for controlling the use of restricted electronic products in unattended locations. The system and method according to an embodiment of the present invention requires the user of the restricted electronic product to have a mobile device such as a smart phone having an age verification capability, in the proximity of the restricted electronic product that can communicate with the restricted electronic product and receive age confirmation from the mobile device that the user is not a minor. The age confirmation may be in the form of a signed statement that the restricted electronic product can accept to unlock its operation.

In an embodiment, the mobile device may be paired once initially at a first time e.g., a first use, using a safe pairing process, for example by requiring the smart phone owner to enter a unique pairing code specific for each restricted electronic product which only the user of the restricted electronic product can retrieve from the restricted electronic product. For example, the pairing code may be written in a label attached to the restricted electronic product readable by naked eye by the user or in or outside the package of the device that only the buyer has in its possession. According to another example, the pairing code may be displayed on an LED display of the restricted electronic product. The pairing is optional for some products and is made available to improve the usability or the security of the solution.

The user may prove their legal age using an age verification method; all methods are assigned a Level of Assurance (LoA) depending on the degree of confidence one may have over the results of the proofing. As an example, the 'proofing' of the age using a self-declarative method (such as a user entering his date of birth or tapping on a button claiming that his age is over 18 or 21) will have a low LoA, while a method in which the user's age has been confirmed by a law-enforcement agent in a face-to-face control using official documents of the user will have a much higher LoA.

The restricted electronic product may not be used by the user without the presence of a mobile device near the restricted electronic product and the receipt of age confirmation of the user of the mobile device. Age confirmation may mean confirmation that the user is not a minor. Age confirmation may be in the form of an encrypted statement, also referred to hereinafter as an age verification statement.

According to an embodiment, after an initial pairing of the restricted electronic product with a mobile device of the user having performed an 'age proofing' of his/her age, any future attempt to use the same restricted electronic product only requires that the restricted electronic product and the paired mobile device are in the required vicinity and that the user agrees (consents) to use the restricted electronic product. The user consent may be stored in the mobile device for a limited period of time, to increase the usefulness of the restricted electronic product by allowing uninterrupted operation for a desired period of time. This way the system and method of the present invention ensure that the purchaser of the restricted electronic product can use the product with minimum intervention, while still preventing unauthorized use of it.

According to an embodiment, the age of the user of the mobile device user is verified before the initial communication or pairing between a restricted electronic product and the mobile device, and communication or pairing is only allowed with a mobile device having an advertised age verification capability. In other words, the restricted electronic product can only communicate (and pair) with a mobile device which is present in the vicinity of the restricted electronic product and which has an age verification application installed and activated. In such an embodiment, the user will still need to be able to unlock the mobile device by entering a pin or some other identification means such as a fingerprint to confirm that he or she is the owner of the age certified mobile device and the user that proved his/her age in the age verification application.

The mobile device may be connected with the restricted electronic product wirelessly via Bluetooth, or NFC; however, other wireless methods with similar characteristics may be used. In a preferred embodiment, connection between the restricted electronic product and the mobile device is established using NFC to ensure connection can be established only when the mobile device and the restricted electronic product are in a very short distance of about 30 cm or less, preferably 20 cm or less.

In operation, once a user attempts to use the restricted electronic product, a control circuit of the restricted electronic product may block the operation of the restricted electronic product and initiate a request of the restricted electronic product to seek a mobile device in the vicinity of the restricted electronic product. If no paired mobile device is detected in the vicinity, a pairing request is sent to a mobile device detected in the vicinity. The restricted electronic product may only pair with a mobile device which has the age verification capability. Then, an initial pairing of the mobile device with the restricted mobile device may be established. Before the initial pairing, the age verification application must have already completed an age proofing process of the user of the mobile device. Otherwise, the mobile device may not advertise the requested service to the restricted electronic product. The age verification application of the mobile device may advertise the age verification capability of the mobile device by emitting a short-range signal (e.g., radio signal) including a code which may be recognized by the restricted electronic as an indication that the mobile device has the age verification capability. The age verification application of the mobile device once the age of the user (owner) of the mobile device is verified may turn the mobile device into a key fob for unlocking the operation of the restricted electronic product.

Once communication between the restricted electronic product and the mobile device is established, the age verification application may prompt the user of the mobile device to enter his consent, e.g., in the form of a pin to confirm that the mobile device is in the hands of the user (owner) who has been verified to be an adult (not a minor).

If successful connection is achieved with the mobile device, the age of the user of the mobile device has already been verified, and the user has given his consent (e.g., by entering a pin) (or his content is recent), the age verification application may send the age confirmation to the control circuit of the restricted electronic product which may then unblock the operation of the restricted electronic product and the user can use it.

In an embodiment, the age verification application may communicate with an age verification platform on the cloud (e.g., internet) to verify the age of the user, however, the invention is not limited in this way. In an embodiment, once the age of the owner of the mobile device is proven, the age verification platform generates an age verification entry specifically associated with the mobile device and an account is created which the owner can use via a user id and a pin (provided either by the system or the user himself). In an embodiment, the user id may be stored and automatically entered by the age verification application and the user may simply give his consent to expose his/her age just by entering the pin (just like a short password). Preferably, to reduce the risk of an original incorrect proof of age, the platform may perform regular risk-analysis controls and when the analysis is negative the platform blocks the account of the user and requires a new age proofing. In an embodiment, the smart phone application may check the age of the user by accessing the age verification platform, any time this is needed. Various web-based solutions may be used. One such method is described in co-pending patent application by the same inventor and applicant with serial no. 62793908 which is incorporated herein by reference for all purposes.

In an embodiment the system includes an age checking component which is included in the restricted electronic product, a mobile device including an age verification application, and a web-based platform (age verification platform). The age checking component, the mobile device and the age verification platform may communicate using wireless mobile and web technologies. Validation of the age of the user of the mobile device may be performed by the age verification application and the age verification platform.

According to an embodiment a method for unlocking the operation of a restricted electronic product is provided, the method including the following:
1) the mobile device receiving a pairing request from the restricted electronic product;
2) confirming that the user of the mobile device (e.g. a smart phone) is indeed the user that performed the original age validation. This can be, for example, accomplished by requiring that the user originally validated provides a self-declared pin code that is later used to unlock the age-verification mechanism. Alternatively, a fingerprint or some facial recognition unlock mechanism may be used for a limited period of time to improve usability of the system, but ensuring that only the owner of the mobile device can use the mobile device and the age verification application. Other methods, used for multi-factor authentication, such as gaiting, tapping on the keyboard, etc. are not excluded from being used as alternative methods to prove that the user requesting to share his/her age is indeed the user that originally performed the proofing of his/her age.
3) Once the user has entered the pin code (or the biometrics solution offered by the smart phone to unlock the pin code), he or she may then accept a pairing request received from the restricted electronic product. As an added safeguard proper acceptance of the pairing request may require entering a unique pairing code which the user can get only from the restricted electronic product. Alternatively, the user may use the Age Verification application to scan a QR-code present on the restricted electronic product and substitute the unique pairing code.
4) The age verification application which is loaded on the mobile device and which has already verified that the user of the phone is not a minor may then communicate wirelessly with the control circuit of the restricted electronic product to transmit the age confirmation so that the control circuit may unblock the operation of the restricted electronic product. The age verification statement issued by the age verification platform, transiting the age verification application on the mobile device and being sent to the restricted electronic product is signed with a private key of the age verification platform. It may only be decrypted and understood by restricted electronic products having stored the relevant public key in their internal storage. Using this public key, the restricted electronic products are able to decrypt the age confirmation statement and decide on granting or nor access to the product; and
5) The restricted electronic product receiving the age confirmation statement that the user is not a minor and unblocking its operation.

The solution may use a combination of Artificial Intelligence and Big Data algorithms to achieve a high level of accuracy and risk analysis of every user action, related to the user's age identity; no personal information is related to this analysis, just the date of birth, the mobile device identifier and the usage logs. Those controls may eventually block a user who has engaged in questionable activity. The blocked user may then be required to prove again his age, before performing any further actions. If the blocked user is successful in proving their age again, then any previous pairings with hardware devices may be restored.

According to an embodiment, the system may include an age checking component installed in the restricted electronic product during its manufacturing. The age checking component may include a control circuit and a software library for programming the required functionalities of the control circuit to control a critical component of the restricted electronic product based on whether confirmation of the age of the user is received from a mobile device of the user. The critical component may, for example, be a power supply to a component of the restricted electronic product that is critical for the enjoyment of the product. For example, this may be a heating element for heating the tobacco or the vaping fluid of the restricted electronic product. As another example, the critical component may be the one allowing the user to buy age restricted product off an unattended automatic dispenser of alcohol or tobacco. Control of the critical component may include controlling a lock/unlock device such as, for example, a power switch. The control circuit may control the lock/unlock device for blocking and unblocking the operation of the restricted electronic product based on whether or not the age confirmation statement of the user's age is received from a connected mobile device in the vicinity of the restricted electronic product. The control circuit may also control the wireless communication of the restricted electronic product with the mobile device. The control circuit may be an integral part of an overall control circuit of the restricted electronic product which controls the operation of all the components of the restricted electronic product. In an embodiment, wherein the restricted electronic product already includes wireless communication capabilities and a control circuit, the age checking component may be just a software library which provides the necessary functionality of checking the age of the nearby user to the existing control circuit of the restricted electronic product.

The age checking component may control directly the turning on or off of the product (or the most critical and age-restricted actions, such as the actual vaping) and may communicate with the other components of the restricted electronic product such as buttons, microprocessors, etc.; alternatively, the age checking component may be simply invoked by the existing control circuit whenever the last one needs to know if the nearby user is an adult or not.

The integration of the age checking component with the existing software and hardware of the restricted electronic product may be certified as conformant to best age verification practices by independent authorities.

At a first use: the new user of the restricted electronic product may pair the product with the age verification application on the mobile device;
optionally, the user may pair the product with more than one mobile devices, to be used interchangeably;
similarly, one mobile device may be paired to multiple age-restricted electronic products;

On every use: the user may press the power button or may indicate with a different method that he wants to use the restricted electronic product;
the age checking component may then block the operation of the restricted electronic product and initiate a connection with a nearby mobile device or devices and if the connection is successful, and the mobile device sends a positive age confirmation statement to the restricted electronic product that the age of the user of the mobile device has already been verified to be at least the minimum age required for using the product in the current user's country (determined by the age verification application) then the control circuit will allow the operation of the restricted electronic product.

If no paired mobile device is in proximity with the restricted electronic product (the minimum distance may vary from less than a few meters to less than a few centimeters) or if an already paired device seizes to be in proximity then the age checking component will not allow the starting of the operation of the restricted electronic product or critical parts of it (as an example an automatic vending machine for alcohol or tobacco may still turn on, but prohibit dispensing age-restricted products). The user has to bring a mobile device in proximity and restart the process. In other words, when a mobile device is found, but it's not sufficient close to the restricted electronic product, the operation of the restricted electronic product may not be authorized and may be blocked. If no mobile device is found, the system allows the user to try connecting with another device. This is described in more detail in Fig.3.

In an embodiment, if a mobile device gets connected, the age checking component may communicate its type to it. The mobile application finds then the user's location and in combination with the product type checks with the web platform the age requirements for the product usage. The user is then required to prove that he or she is the one originally registered in the mobile application. He or she can do that with at least one factor user-to-application authentication such as entering a pin code in the application, or preferably with a two-factor user-to-device authentication such as a combination of an authentication for the mobile device and a pin code or biometrics (such as the user's fingerprint etc.) for accessing the age verification application. The user's hidden Id along with the remaining parameters may be sent to the web-based age verification platform that decides if the user is granted access to the product or not. The response is returned encrypted to the age checking component that decrypts it and if positive, unblocks usage of the product. If negative, the age checking component is obliged to forbid access to the product.

To improve usability, the mobile application may cache the platform's response as long as:
the product and the mobile device continue to be in close proximity;
the time (measured by the mobile application) between the first verification and the last request for approval is reasonable, e.g. a few hours for vaping devices;
the number of age checks (measured by the age checking component) is reasonable (less than 50);
and the mobile device has not received a notification from the web platform to disable the authorization.

To support the above, multiple extra verifications are performed at the messages exchanged between the age verification platform, the mobile application and the age checking component on the restricted electronic product. Those verifications serve to avoid on purpose efforts to falsify the authoritative response of the age verification platform, either by replacing the mobile application or the restricted electronic product with a hacked one!

The present invention has a number of advantages. It solves the problem of illegal daily usage of a restricted electronic product, by incorporating an age checking component in the restricted electronic product to control their operation and prevent illegal underage use. For restricted electronic products already being equipped with a control circuit, and wireless capabilities, the age checking component may be a software library which communicates securely with the mobile application of the user and requests the age confirmation statement; this response is then passed on to the control unit which may decide on the appropriate action (e.g. blocking turning on the device or prohibiting the sale of a restricted item).

The mobile device having its user confirmed as an adult operates as a fob for unlocking the operation of restricted electronic products.

When the communication between the restricted electronic product and the paired mobile device is lost for more than a preset time, the restricted electronic product operation may be blocked and may become available once again only if the user brings the paired mobile device within a preset distance and also proves ownership of the smart phone and that he or she is the person originally proven his or her age.

The combination of Big data and Artificial Intelligent is able to identify attempts to bypass security controls, as the verification is almost continuous.

Referring now to FIG 1, a simplified schematic of a system according to an embodiment of the present invention is provided. The system includes a restricted electronic product 200 including an age checking component 100, a mobile device such as a smart phone 300, with an Age Verification application 400 installed, and an age verification platform 500. Well known features of a restricted electronic product 200 and of the smart phone 300 are not shown to avoid obscuring the invention with minutia.

The smart phone 300 includes the mobile application 400 configured to providing age verification functionality AV and wireless communication capabilities WC. In an embodiment, t

The restricted electronic product 200 may be for example an electronic cigarette (also referred to as an e-cigar) or a vaping device or an automatic dispenser of products for adults. In an embodiment, the restricted electronic product 200 may be a heated tobacco e-cigar. The restricted electronic product 200 may include an age checking component 100. The age checking component 100 may be just a software library or an intelligent hardware component. The component 100 may interact with a control circuit CC of the restricted electronic product in order to provide the following functionalities to the restricted electronic product:
1) instruct the control circuit to block the age-restricted operations of the restricted electronic product 200, for example, when trying to warm the e-cigarette or when a user is placing their lips around the mouth piece of the restricted electronic product 200;
2) direct the age checking component 100 of the restricted electronic product 200 to seek a mobile device with an advertised age verification capability and communicate and/or pair with the mobile device;
3) request an age confirmation statement for the user of the mobile device; and
4) instruct the control circuit to unblock the operation of the restricted electronic product upon receipt of a valid and positive age confirmation statement; i.e., confirmation that the age of the user of the mobile device has been confirmed and the user is not a minor for the claimed usage in the territory the user is currently found.

The restricted electronic product 200 should include a wireless communication device adapter WCA such as a Wi-Fi, Bluetooth or NFC adapter. Alternatively, the software library of the invention may be included in a hardware wireless component which interacts with the control circuit of the restricted electronic product 200.

The age checking component 100 may control access to the age-restricted operations or instruct the Control Circuit CC to control those operations; those operations may include use of the device as a whole or specific operations of the device that require adult use. In some embodiments, the age checking component 100 may include a software library and a hardware component. The hardware component of the age checking component 100 may be integrated with the remaining hardware of the restricted product. In an embodiment, if all hardware requirements are satisfied by the restricted electronic product itself the age checking component may consist of the software library only. For example, existing e-cigars may include wireless communication capability such as Bluetooth or Wi-Fi. The invention though is not limited to using Bluetooth, as it may equally be applied to any wireless device and protocol supporting: wireless connectivity, and secure communication; for restricted electronic products bought and used by individuals the pairing capability (ability to known in advance the counterparty) is also required. The wireless device may also provide distance estimation capability.

The restricted electronic product may include a control circuit CC for controlling the operation of its various parts. The age checking component 100 may be integrated or may be operatively connected with the control circuit CC using a suitable communication bus. The age checking component 100 may also include the capability to measure the distance between the smart phone and the restricted product.

Referring now to FIG 2, the operation of the age checking component 100 of the restricted electronic product will be described according to an embodiment of the present invention. FIG 2 highlights the operation of this component while being used both for individual or public use and does not depict the interactions with other components of the invented system, which are described in FIG 3.

The user of the restricted electronic product may attempt to start using it at step 2000. This may for example involve pushing a start button of a privately-owned e-cigarette or the start button of an unattended (in public space) betting machine. Alternatively, the start event may be triggered by a mouthpiece sensor that senses the respiration of the user and initiates a start mechanism when the user starts inhaling to simulate traditional cigarette experience. Alternatively, the start event may be fired at a later stage of a user-to-machine interaction, when the operation requested requires that the user is of a certain age, such as before payment at an automatic dispenser after the user has already selected products reserved for adults (e.g. tobacco, alcohol, etc.).

At step 2000, a self-check of the age checking component is performed. During this check, the component verifies that critical parts have not been compromised, e.g. the public key is readable and the checksum has the correct value. If the check is negative, all further operations are forbidden and the component instructs the restricted electronic product to block any age sensitive operations (redirect to step 2950).

At step 2050, the age checking component decides the next steps based on whether the product belongs to the user and therefore is for own individual usage or is a publicly available product that anyone may use. This may be included as hard-coded information in the age checking component depending on the product type, however it may be configured differently; an example is the use of an automatic dispenser in a closed environment (small office) where the users are limited and repetitive. As can be seen later on, the main difference between the two flows is in the pairing process found in the individually used products. This pairing improves drastically the user experience of the product, therefore whenever possible that pairing should be enabled. We note that pairing involves an initial additional effort that is only justified if repetitive use of the product is foreseen.

Assuming the check in 2050 is enabled [Yes], the usage may be speeded incredibly. If at step 2110, the product is in continuous wireless connection with the nearby paired smartphone, the control is passed to another quick step 2120. If the connection has been lost and the smartphone is no longer reachable, the age checking component then starts looking for other paired smartphones or eventually request new pairing; all that is described after step 2150.

At step 2120, the component is connected with the smartphone, but we want to make sure that the user is close enough to use the product. Using any available methods to check the distance of the smartphone from the restricted electronic product, the age checking component makes sure the smartphone is in the range originally defined in the product (e.g. a few meters or centimeters). For example, this can be achieved by measuring the relative signal of the wireless connection, asking the user to use the smartphone to scan a projected QR-code or any other suitable method. If the estimated distance is longer than the required limit, then the age checking component should instruct the restricted electronic product to block the operation (step 2950). Otherwise, the flow continues to step 2130.

At step 2130 the actual age check is performed. The age checking component communicates with the smartphone, which returns an age verification statement. If the statement is positive, the age checking component instructs the restricted electronic product to allow the execution of the restricted operation as step 2900. Otherwise, the component instructs the product to block the operation at step 2950. The statement (as described in FIG 3) is encrypted with the private key of the age verification platform and decrypted by the age checking component, holding the public key of the platform. As those keys may expire in the future, the age checking component may include a feature to update the public key. The update can take place only when there is connectivity via a connected smartphone and the age verification platform decides to push the new public certificate to all connected age checking components.

Going back, after step 2110 with the last smartphone not connected, the control moves to step 2150. Assuming that there are other smartphones already paired with the product (e.g. for safety purposes the owner paired more than one smartphone or in a small office other users paired with the automatic dispenser to quickly buy age-restricted products), the age checking component tries to connect to the next smartphone in the list.

At step 2170, depending on the actual wireless protocol used (Wi-Fi, Bluetooth, NFC, etc.) the next smartphone may be one that the age checking component detects as being close to the product. Otherwise, an effort is made to connect to the next smartphone in the paired list.

If, at step 2180, the smartphone next in the list becomes connected with the product, then the system continues at step 2120, checking if the smartphone is in the required range. Otherwise, the component checks at step 2190 if other smartphones are in the paired list and available for connection. If the answer is positive, the age checking component will try connecting to the next available one, at step 2170. If there are no other smartphones available, an effort to pair with newfound smartphones will be done, at step 2160.

At step 2160, the age checking component looks for smartphones with the ability to serve as age verification systems. The user of the smartphone wishing to pair with the restricted electronic product should enable the advertising features of the smartphone, provided by a specific operation of the age verification application. Depending on the wireless protocol used by the age checking component, it will try to look for smartphones with specific characteristics, advertised by the age verification application of the smartphone. As examples, the following are foreseen:
a. For Wi-Fi: the smartphone intends to participate in a Peer-to-peer Wi-Fi connection with predefined parameters; using specific channels a unique pairing code is exchanged to guarantee that the user is indeed connected to the correct product. The smartphone owner must key-in a code, known only to the age checking component; this code is typically hard coded in the product and displayed in the packaging
b. For Bluetooth: the smartphone advertises a commonly agreed service universally unique identifier (uuid) and waits for a pairing message to be received; for the age checking component to trust and send the message, the smartphone owner must key-in the unique product code
c. For NFC: the smartphone tries to read a specific tag from the restricted electronic product; it then publishes another tag including the unique code of the product which the age checking component validates

If the pairing did not succeed with any nearby smartphones (step 2195) then the age checking component instructs the product to block all age-restricted operations. Otherwise, the component tries to connect with the newly paired smartphone at step 2150.

If, at step 2050, the product is configured for public use, then pairing is excluded. At step 2210, the age checking component tries to find nearby smartphones able to quickly send an age verification statement - if possible. During this step, the distance between the product and the smartphone is taken into account before moving to the next step. Smartphones that are - typically - a lot closer than in the individual usage case may be included in the list of nearby smartphones. Preferably, irrespective of the protocol, the distance should not be longer than 0.5 to 1 meter. The step is similar to the step 2160 (pairing) with the only difference that the user should not invoke the pairing operation on the smartphone, but another one related to the age verification to be used with products. By selecting this option, the age verification application performs similar advertising functionality as in 2160, with no need for the user to key-in a product specific code and no exchange of messages. Any smartphone found to advertise the pre-agreed services is added to the list of nearby smartphones.

If no nearby smartphones are found at step 2210, then at step 2230 the age checking component will instruct the product to block all age-restricted operations.

Otherwise, the age checking component will try connecting to the next smartphone in the list, at step 2240. Connection is achieved by the exchange of dummy messages between the smartphone and the restricted electronic product (the age checking component).

If, at step 2250, the connection is successful, then the age verification step as described in step 2130 takes place. The age checking component requests an age verification statement from the connected smartphone and if successful and positive unblocks the age restricted operations. Otherwise, the next available nearby smartphone is selected and an effort is made to connect with it.

In FIG. 3 the detailed description of the interactions between the age checking component of the Restricted Electronic Product (REP), the age verification application (AVA) installed on the mobile device and the Age Verification Platform (AVP) is provided. The REP initiates the interaction, the AVA transmits this request to the AVP, which generates an encrypted age verification statement (AVS), which is then returned back to the AVA and transmitted to the REP. If the statement is positive, the age checking component instructs the REP to unblock the age restricted operation. Otherwise, the operation is blocked. If repetitive requests are initiated from the REP to the AVA, this last may return recently generated AVS. Finally, to allow proper certificate management, the AV Platform may at any moment decide to push a new certificate to all restricted electronic products making use of an outdated or compromised one.

When the request at step 2130 is sent to the smartphone via the wireless communication, the AVA checks the validity of the request at step 213000. The validation may be performed based on numerous parameters, such as timestamps, unique one-time identifiers, etc. The purpose of the validation is to avoid man-in-the-middle and repudiation security issues. If the validation is negative, the request is rejected and the REP is immediately informed.

Assuming that the request is valid at step 213000, the AVA checks at step 213010 to see if a non-expired age verification statement exists for this request. The check is performed on the main request parameters, such as the unique REP identifier, the product type, etc. If a valid statement exists in the AVA, control is passed to step 213020.

The statement related to the incoming request is then packaged at step 213020 and send back to the age checking component of the REP. The package contains apart from the encrypted age verification statement, information for the smartphone (such as unique identifiers known to both the REP and the AVA), timestamp, the unique one-time identifier of the request, etc.

At step 213030, the message sent from the AVA is received by the REP and is decomposed in pieces. If the process is successful, the response should contain all parts of the original package. If an encrypted part is found in them, then this one is decrypted using the currently available public certificate. If during this process, any error occurs this is flagged and the next step will immediately reject the entire response.

At step 213040, those pieces (or the error of decomposition) are validated. Typical validations include but are not limited to: checking the identifier of the smartphone as being the same to the one the original request was sent, checking that the one-time unique identifier of the request is the same, the age verification statement is properly decrypted and the timestamp has not elapsed and the value is in the accepted list of values (e.g. true and false), the number of times the specific AVS is returned is not greater than an acceptable limit set by the manufacturer and corresponding to typical use over a period of grace time, etc. If any of those checks fails, then the response is considered false and the statement NEGATIVE, as at step 2136.

Assuming that the validation of the response is positive, at step 213050, the age checking component examines the possibility of updating the public certificate of the Age Verification Platform (as mentioned above for the cases of expired certificates or serious compromise of the certificate). If a new certificate is found, this is extracted from the response and stored in the age checking component of the REP, at step 213190.

Finally, at step 213060 the value of the response is checked and the age checking component returns a positive (step 2135) or negative (step 2136) response for the original request.

If at step 213010 a valid age verification statement is not found, then a new request for a statement is built to the age verification platform. As a first step, the geographical location (country or region) of the smartphone is found at step 213100. This information is very important for the correct identification of the rules to be applied by the AVP. The location discovery may be performed either with the use of the smartphone GPS technology, information from the GSM network the smartphone is connected to, from the IP address of the smartphone, or a combination of the above.

As soon as the location is found, the age verification application starts interacting with the AVP at step 213110. This interaction includes that the smartphone user proves ownership of the device and the age verification application (during age proofing the user or system chose a unique code to encrypt the information at the AVP). It is enough for the user to unlock the AVA (eventually by keying-in the unique code) and retrieve this unique code.

At step 213120, a check is made to make sure that the user managed to unlock the AVA and retrieve the unique code. If this is not successful, then the original request is rejected and a negative response is sent at step 2136.

Assuming that the user managed to retrieve the correct unique code, control is passed to the Age Verification Platform at step 213130. During that step, the platform checks the validity of the request, and tries to retrieve all relevant information for the request, and evaluates the age verification requirement relevant for the geographical location, the product type and the user's age. Based on that information a response is generated in the form of an Age Verification Statement.

At step 213150, the system checks if a new public certificate has been issued in the platform and needs to be sent to the REP. The check takes into account both administrative decisions recorded in the platform, as well as the status of the public certificate at the specific REP. Other information may be used in this check, in order to improve the security of the system and avoid any issues. Additionally, multiple certificates may exist, one for each REP type, which needs to be taken into account during this check. If the check is positive, the new certificate for the REP is assigned to it at step 213160 and included in the response.

At step 213170, the response is encrypted with the corresponding private certificate for the REP that performed the original request. This response, in the form of an Age Verification Statement, is then returned to the calling AVA.

At step 213180, the AVA stores the AVS returned by the Platform in internal storage, related to the original request. Multiple pairs of request/responses may exist in the AV application at any time; they are cleaned up regularly by the application itself, when the validity of the statement expires. Just after storing the pair and managing the previous list of requests/responses, the new response is forwarded for submission to the REP at step 213020Although the invention has been described with specific embodiments it should be understood that many other embodiments may be envisaged by those skilled in the art to which the present invention pertains without departing from the scope or spirit of the present invention as defined by the following claims.

## Claims

1. A system for controlling the operation of a restricted electronic product by a user to prevent operation by a minor, the system comprising:
a restricted electronic product;
a mobile device in communication with the restricted electronic product;
an age verification application included in the mobile device
an age verification platform configured to verify the age of the user, to generate an age verification statement that the user of the mobile device is not a minor, and transmit the age verification statement to the mobile device and then to the restricted electronic product;
wherein the restricted electronic product is configured to operate only after receiving the age verification statement from the mobile device.

2. The system of claim 1, wherein the restricted electronic product and the mobile device communicate via a wireless communication method included in the restricted electronic product and the mobile device, respectively.

3. The system of claim 1, wherein the restricted electronic product further comprises a control circuit operatively coupled to a critical component for the operation of the restricted electronic product so that the control circuit can block or unblock age-restricted operations of the restricted electronic product by controlling whether or not the age verification statement is received from the mobile device and it is positive or not.

4. The system of claim 1 further comprising a cloud-based age verification platform, wherein the age verification application of the mobile device can be operatively connected with the age verification platform for proving the age of the user.

5. The system of claim 1, wherein unblocking of the operation of the restricted electronic device may further require that the restricted electronic product is paired with the mobile device using a pairing code that the user can obtain from the restricted electronic product. This is optional and only applicable for individually used products and for the convenience of the end user.

6. The system of claim 1, wherein unblocking of the age-restricted operations of the restricted electronic product further requires that the mobile device is within a preset distance of the restricted electronic product which is 2 meters of less.

7. The system of claim 1, wherein the restricted electronic product communicates with the mobile device via one of any suitable wireless protocol devices including WiFi, Bluetooth, and NFC.

8. The system of claim 1, wherein the restricted electronic product communicates with the mobile device via NFC to ensure that communication can be established only when the mobile device and the restricted electronic product are within a distance that is less than about 30 cm or less, preferably 20 cm.

9. The system of claim 1, wherein the restricted electronic product is a vaping device, an electronic cigarette, an electronic mild drug intake device, a heated tobacco electronic cigar, or a product used in public offering products or services only for adults, such as an automatic dispenser of alcohol, tobacco, or an unattended betting machine.
